(19) Europäisches Patentamt
European Patent Office
Office européen des brevets

(11) EP 0 786 618 B1

(12) **EUROPÄISCHE PATENTSCHRIFT**

(45) Veröffentlichungstag und Bekanntmachung des Hinweises auf die Patenterteilung:
04.11.1998 Patentblatt 1998/45

(51) Int Cl.[6]: **F16L 41/00**, F16L 41/08, E03F 3/02

(21) Anmeldenummer: 97101104.4

(22) Anmeldetag: 22.01.1997

(54) **Anschlusselement für ein Zuleitungsrohr**

Connecting element for a branch pipe

Elément de connection pour un tuyau de branchement

(84) Benannte Vertragsstaaten:
AT BE CH DE DK ES FR GB IT LI NL SE

(30) Priorität: 29.01.1996 DE 29601453 U

(43) Veröffentlichungstag der Anmeldung:
30.07.1997 Patentblatt 1997/31

(73) Patentinhaber: DENSO-Holding GmbH & Co.
51371 Leverkusen (DE)

(72) Erfinder:
• Der Erfinder hat auf seine Nennung verzichtet.

(74) Vertreter: Langmaack, Jürgen, Dipl.-Ing. et al
Patentanwälte
Maxton . Maxton . Langmaack
Postfach 51 08 06
50944 Köln (DE)

(56) Entgegenhaltungen:
DE-C- 3 719 552        FR-A- 2 233 555
US-A- 3 406 988        US-A- 4 429 886

**Beschreibung**

Die Erfindung betrifft ein Element zum Anschluß eines Zuleitungsrohres an ein, einen größeren Durchmesser aufweisendes Hauptrohr.

Der nachträgliche flüssigkeitsdichte Anschluß eines Zuleitungsrohres an ein Hauptrohr, insbesondere an ein Hauptrohr aus Beton, erfordert ein gesondertes Anschlußelement, das in eine Bohrung in der Wandung des Hauptrohres zuverlässig dichtend einsteckbar sein muß und in das dann das Zuleitungsrohr eingeschoben werden kann.

Die DE-A-3719552 beschreibt ein Element zum Anschluß eines Zuleitungsrohres an ein, einen größeren Durchmesser aufweisendes Hauptrohr mit einem in eine Bohrung im Hauptrohr einzuführenden Einsteckteil, daß auf seiner Außenfläche mit einer umlaufenden Dichtmanschette aus einem gummielastischen Werkstoff versehen ist, und mit einem daran anschließenden Muffenteil, an dessen Innenwandung ein Dichtungsring angeordnet ist und in das ein Ende des Zuleitungsrohres einschiebbar ist. Das Anschlußelement der eingangs bezeichneten Art erlaubt das sichere, flüssigkeitsdichte Verbinden eines Zuleitungsrohres mit einem Hauptrohr. Das Anschlußelement besteht zweckmäßigerweise aus einem festen Kunststoff, vorzugsweise PVC, Polypropylen oder faserverstärkten Kunststoffen. Zur Montage wird an der Zuleitungsstelle in das Hauptrohr, beispielsweise einem Abwasserkanal aus Beton, eine Bohrung zur Aufnahme des Verbindungselementes angebracht, beispielsweise mittels einer Diamantbohrkrone. Das Einsteckteil des Anschlußelementes wird in die Bohrung gesteckt, wobei die auf der Außenfläche des Einsteckteils angeordnete Dichtmanschette im ganzen Bereich der Bohrlochwandung eine hohe Dichtwirkung gewährleistet. Durch die Verwendung eines gummielastischen Werkstoffs für die Dichtmanschette werden Unebenheiten in der Bohrlochwandung ausgeglichen und die Dichtwirkung somit erhöht. Um das Einpressen des mit einer Dichtmanschette versehenen Einsteckteils in die Bohrung zu erleichtern, ist es vorteilhaft, die Bohrwandung mit einem Gleitmittel zu bestreichen. Das Zuleitungsrohr wird zum Anschluß in das Muffenteil des Anschlußelementes gesteckt. Durch den Dichtungsring im Muffenteil wird auch an dieser Stelle das Ein- und Ausdringen von Flüssigkeiten zwischen dem Zuleitungsrohr und dem Muffenteil verhindert.

Gemäß der Erfindung nach Anspruch 1 ist vorgesehen, daß wenigstens ein auf das Einsteckteil aufschiebbarer und an einer Anschlagschulter anlegbarer Abstandring vorgesehen ist. Um die Variantenanzahl zu senken, ist es vorteilhaft, möglichst nur eine Ausführungsform des Anschlußelementes passend für Hauptrohre unterschiedlicher Nenndurchmesser und Wanddicken zu fertigen. Dieses gelingt dadurch, daß die zu fertigende Länge des Einsteckteils die maximal notwendige Länge aufweist, um die Bohrung aller Hauptrohre flüssigkeitsdicht abzuschließen. Das Hereinragen des Einsteckteils in den Innenraum von Hauptrohren mit entweder geringerem Nenndurchmesser und/oder geringeren Wanddicken ist durch einen Abstandring vermeidbar. Dieser Abstandring ist auf das Einsteckteil aufschiebbar und liegt an einer Anschlagschulter sowie dem Außenumfang des Hauptrohres an.

In einer bevorzugten Ausgestaltung ist es vorgesehen, daß der Abstandring als Formring ausgebildet ist, dessen eine stirnseitige Anlagefläche in ihrer Kontur an die Krümmung der Außenflächen des Hauptrohres angepaßt ist. Durch den Einsatz eines Formrings existiert eine genau definierte Anlagefläche zwischen Formring und der Außenfläche des Hauptrohres. Als Material für die Abstand- und Formringe kann vorzugsweise Polyethylen verwendet werden. Dieses Material paßt sich bei hohen Axiallasten, die durch das Zuleitungsrohr aufgebracht werden, gut an die Außenfläche des Hauptrohres an. Hierdurch können Paßungenauigkeiten von 1 bis 2 mm überbrückt werden, und es wird eine sichere Lastübertragung gewährleistet.

In weiterer Ausgestaltung der Erfindung ist es vorgesehen, daß zusätzlich zu den Formringen wenigstens ein weiterer Abstandring vorgesehen ist. Diese Lösung weist den Vorteil auf, daß der Formring nur die Funktionen der Anpassung an die Außenfläche des Hauptrohres übernehmen muß und der Ausgleich der Wanddickendifferenz über einen Abstandring geschehen kann. Durch die Trennung dieser Funktionen ist eine Reduzierung der Variantenanzahl möglich.

In weiterer Ausgestaltung der Erfindung ist ferner vorgesehen, daß zumindest der Formring und/oder der an der Anschlagschulter anliegende Abstandring verdrehsicher mit dem Einsteckteil verbindbar sind, und bei der Anordnung von wenigstens zwei Abstandringen Mittel zur festen Verbindung der Abstandringe untereinander vorgesehen sind. Die Mittel zur festen Verbindung der Abstandringe dienen dazu, diese zumindest verdrehsicher zu verbinden und möglichst auch eine axiale Sicherung zu gewährleisten. Der Vorteil der axialen Sicherung liegt beispielsweise darin, daß einerseits die Abstandringe zu Paketen zusammengefaßt werden können und diese auf dem Einsteckteil fest vormontiert werden. Hierdurch wird bei der Montage ein Abrutschen der Abstandringe vom Einsteckteil vermieden und somit die Montage vereinfacht.

In weiterer Ausgestaltung der Erfindung ist vorgesehen, daß das Einsteckteil auf seiner Umfangsfläche im wesentlichen parallel zueinander ausgerichtete, umlaufende Haltestege zur Fixierung der Dichtmanschette aufweist. Die Sicherung der Dichtmanschette durch Haltestege verhindert beim Einpressen des Einsteckteils in die Bohrung ein Verschieben der Dichtmanschette auf dem Einsteckteil und somit eine Überdehnung des Dichtungsmaterials. Hierdurch bleibt eine flüssigkeitsdichte Verbindung des Einsteckteils mit dem Hauptrohr gewährleistet.

In bevorzugter Ausgestaltung der Erfindung ist vor-

3          EP 0 786 618 B1          4

gesehen, daß die freie Endkante des Einsteckteils und/oder die Haltestege eine Kontur entsprechend der Formel

$$y = \frac{1}{2}\left(D - \sqrt{D^2 - (d \cdot \sin\alpha)^2}\right)$$

für die Abwicklung aufweisen. Hierin ist D die lichte Weite des Hauptrohres, d der Außendurchmesser des Einsteckteils, y der Abstand von der Anschlagschulter des Einsteckteils in Richtung Endkante des Einsteckteils und α der von 0 bis 360° umlaufende Winkel. Der Vorteil dieser Kontur liegt darin, daß ein Hereinragen des Einsteckteils in den Innenraum des Hauptrohres vermieden wird. Hierdurch wird das Anlagern von durch die Flüssigkeit mitgeführten Feststoffen an das Einsteckteil verhindert. Die entsprechend dieser Formel auf der Außenfläche des Einsteckteils umlaufenden Haltestege bewirken im Bohrloch durch eine verbesserte Anlage der auf den Stegen abgestützten Dichtmanschette eine erhöhte Dichtungssicherheit.

In weiterer vorteilhaften Ausgestaltung der Erfindung ist vorgesehen, daß die auf dem Außenumfang des Einsteckteils angeordnete Dichtmanschette im Längsschnitt wellenförmig, vorzugsweise sägezahnartig geformt ist. Bei einer sägezahnartigen Dichtungsmanschette ist die der Endkante des Einstecksteils zugekehrte Flanke konisch zulaufend ausgebildet. Vorteilhaft wirkt sich dies beim Einpressen des Einsteckteils in die Bohrung aus, da ein Umklappen der einzelnen Dichtungsprofile hierdurch vermieden wird und somit über den Umfang der gesamten Dichtungslippe die Dichtwirkung gewährleistet bleibt.

In einer anderen Ausgestaltung der Erfindung ist vorgesehen, daß an einer Anschlagkante der Innenwandung des Muffenteils ein, vorzugsweise als Gleitdichtung ausgebildeter, Dichtungsring angeordnet ist. Die der freien Endkante des Muffenteils zugekehrte Flanke des Dichtungsringes ist dabei konisch zulaufend ausgebildet, wodurch ein leichtes Einstecken des Zuleitungsrohres und eine definierte Verformung des Dichtungsringes bewirkt und eine einwandfreie Dichtwirkung gewährleistet wird.

In weiterer Ausgestaltung der Erfindung ist vorgesehen, daß an der Innenwandung im Mündungsbereich des Muffenteils vor dem Dichtungsring mit einem Zentrierring versehen ist. Dieser Zentrierring dient einerseits dazu, das Einstecken des Zuleitungsrohres in das Muffenteil zu erleichtern und andererseits als Scherlastsicherung für den Dichtungsring zu wirken.

Die Erfindung wird anhand schematischer Zeichnungen von Ausführungsbeispielen näher erläutert. Es zeigen:

Fig. 1      eine perspektivische Ansicht eines Hauptrohres mit einem in einer Bohrung eingesteckten Anschlußelement, welches das Hauptrohr mit einem Zuleitungsrohr verbindet,

Fig. 2      eine Ausführungsform eines Anschlußelementes im Längsschnitt,

Fig. 3      Ausführungsformen von Formringen im Längsschnitt,

Fig. 4      eine Abwicklung des Einsteckteils.

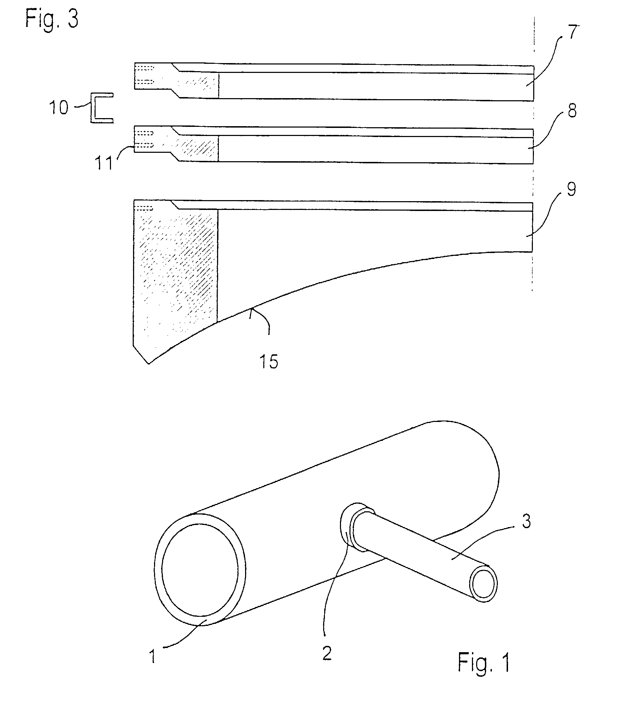

In Fig. 1 ist in einer perspektivischen Ansicht ein Hauptrohr 1 dargestellt, mit dem über ein Anschlußelement 2 ein Zuleitungsrohr 3 verbunden ist.

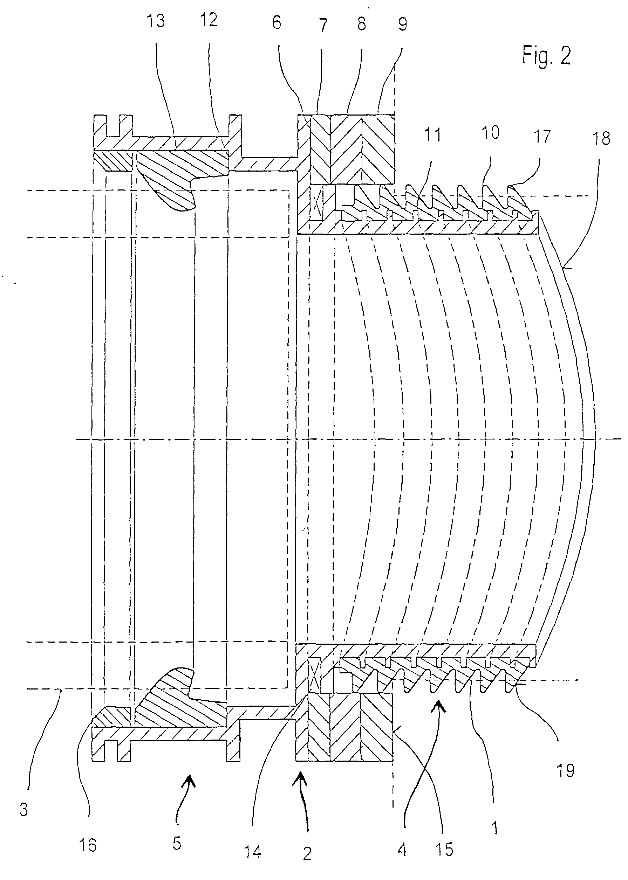

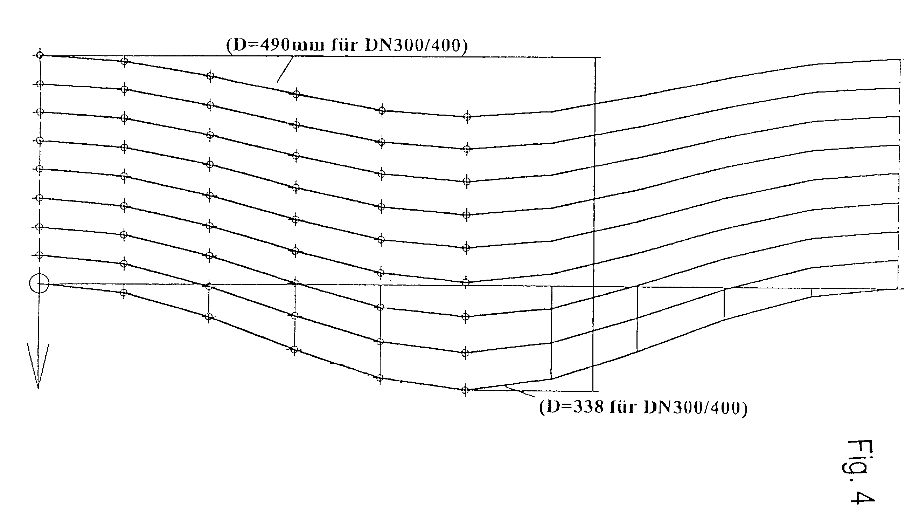

Fig. 2 zeigt den Schnitt durch das Anschlußelement 2 bestehend aus einem Einsteckteil 4 und einem Muffenteil 5. Weiterhin sind an einer Anschlagschulter 6 anliegende Abstandringe 7 und 8 vorgesehen, die zum Ausgleich unterschiedlicher Wanddicken im Hauptrohr 1 auf das Einsteckteil 4 geschoben werden. Über einen hier nicht dargestellten Steckstift, der in eine Ausnehmung 14 im Bereich der Anschlagschulter 6 einsteckbar ist können die Abstandringe 7 und 8, die durch Klauen 10 untereinander verbindbar sind (Fig. 3), verdrehsicher und fest mit dem Anschlußelement verbunden werden. Zur Anpassung an die Krümmung der Außenwandung des Hauptrohres 1 ist ein Abstandring als Formring 9 ausgebildet und mit seiner dem Hauptrohr 1 zugekehrten Stirnfläche 15 entsprechend konturiert.

Die auf der Außenfläche des Einsteckteils 4 angeordnete umlaufende Dichtmanschette 10 ist durch auf der Außenfläche des Einsteckteils 4 umlaufende Haltestege 11 formschlüssig mit diesem verbunden.

Durch die Haltestege 11 wird eine Relativverschiebung der Dichtmanschette 10 gegenüber dem Einsteckteil 4 beim Einpressen in die Bohrung im Hauptrohr 1 vermieden.

Die Dichtmanschette 10 weist zweckmäßigerweise auf ihrer Außenfläche eine im Längsschnitt sägezahnartige Kontur auf, deren konische Flanke 19 auf das freie Ende des Einsteckteils 4 zuläuft, so daß beim Einstecken eine definierte Verformung der einzelnen als umlaufende Dichtrippen 17 wirkende Teile gegeben ist.

Wie in Fig. 4 in einer schematischen Abwicklung des Einsteckteils 4 für konkrete Maßbeispiele dargestellt, folgen sowohl die Haltestege 11 als auch die diesen zugeordneten Dichtrippen 17 in Umfangsrichtung einer Wellenkontur, die dem Verlauf der Durchdringungskurve der Bohrung im Hauptrohr 1 folgt. Damit ist sichergestellt, daß über den Umfang der Bohrungswandung gleiche Dichtbedingungen gegeben sind. Diesem Kurvenverlauf entspricht auch die Kontur der freien, in das Innere des Hauptrohres 1 hineinragenden Endkante 18 des Einsteckteils 4, so daß mit Hilfe einer entsprechenden Zahl von Abstandringen 7, 8, 9 an der Einleitungsstelle ein glattflächiger Abschluß mit der Innenwandung des Hauptrohres 1 gegeben ist.

3

An der Innenwandung des Muffenteils 5 ist ein an einer Anliegekante 12 anliegender Dichtungsring 13 eingepaßt, der im Mündungsbereich des Muffenteils 5 durch einen Zentrierungsring 16 stirnseitig teilweise abgedeckt ist, um Beschädigungen beim Einschieben des angedeuteten Zuleitungsrohres 3 zu vermeiden. Zugleich dient dieser Zentrierungsring 16 als Scherlastsicherung.

Fig. 3 zeigt den Schnitt durch zwei Abstandringe 7 und 8 und einen Formring 9 sowie eine Verbindungsklammer 10.

**Patentansprüche**

1. Element zum Anschluß eines Zuleitungsrohres (3) an ein einen größeren Durchmesser aufweisendes Hauptrohr (1) mit einem in eine Bohrung im Hauptrohr (1) einzuführenden Einsteckteil (4), das auf seiner Außenfläche mit einer umlaufenden Dichtmanschette (10) aus einem gummielastischen Werkstoff versehen ist, und mit einem daran anschließenden Muffenteil (5), an dessen Innenwandung ein Dichtungsring (13) angeordnet ist und in das ein Ende des Zuleitungsrohres (3) einschiebbar ist und für das wenigstens ein auf das Einsteckteil (4) aufschiebbarer und an einer Anschlagschulter (6) anlegbarer Abstandring (7, 8, 9) vorgesehen ist.

2. Element nach Anspruch 1, dadurch gekennzeichnet, daß der Abstandring als Formring (9) ausgebildet ist, dessen eine stirnseitige Anlagefläche (15) in ihrer Kontur an die Krümmung der Außenflächen des Hauptrohres (1) angepaßt ist.

3. Element nach Anspruch 2, dadurch gekennzeichnet, daß zusätzlich zu dem Formring (9) wenigstens ein weiterer Abstandring (7, 8) vorgesehen ist.

4. Element nach Anspruch 3, dadurch gekennzeichnet, daß zumindest der Formring (9) verdrehsicher mit dem Einsteckteil (4) verbindbar ist.

5. Element nach einem der Ansprüche 1 bis 4, dadurch gekennzeichnet, daß zumindest der an der Anschlagschulter (6) anliegende Abstandring (7) fest mit dem Einsteckteil verbindbar ist.

6. Element nach einem der Ansprüche 1 bis 5, dadurch gekennzeichnet, daß bei der Anordnung von wenigstens zwei Abstandringen (7, 8, 9) Mittel (10) zur festen Verbindung der Abstandringe (7, 8, 9) untereinander vorgesehen sind.

7. Element nach einem der Ansprüche 1 bis 6, dadurch gekennzeichnet, daß das Einsteckteil (4) auf seiner Umfangsfläche im wesentlichen parallel zueinander ausgerichtete Haltestege (11) zur Fixierung der Dichtmanschette (10) aufweist.

8. Element nach einem der Ansprüche 1 bis 7, dadurch gekennzeichnet, daß die freie Endkante (18) des Einsteckteils (4) und/oder die Haltestege (11) eine Kontur entsprechend der Formel

$$y = \frac{1}{2}\left(D - \sqrt{D^2 - (d \cdot \sin\alpha)^2}\right)$$

für die Abwicklung aufweisen.

9. Element nach einem der Ansprüche 1 bis 8, dadurch gekennzeichnet, daß die auf dem Außenumfang des Einsteckteils (4) angeordnete Dichtmanschette (10) im Längsschnitt wellenförmig, vorzugsweise sägezahnartig geformt ist.

10. Element nach Anspruch 9, dadurch gekennzeichnet, daß bei einer sägezahnartigen Dichtmanschette (10) die der Endkante (18) des Einsteckteils (4) zugekehrte Flanke (19) konisch zulaufend ausgebildet ist.

11. Element nach einem der Ansprüche 1 bis 11, dadurch gekennzeichnet, daß an einer Anschlagkante (12) der Innenwandung des Muffenteils (5) ein vorzugsweise als Gleitdichtung ausgebildeter Dichtungsring (13) angeordnet ist.

12. Element nach Anspruch 11, dadurch gekennzeichnet, daß die Innenwandung im Mündungsbereich des Muffenteils (5) vor dem Dichtungsring (13) mit einem Zentrierring (16) versehen ist.

**Claims**

1. An element for connecting a feed pipe (3) to a main pipe (1) of larger diameter, with an insertion part (4) to be introduced into a bore in the main pipe (1), which part is provided on its outer surface with a peripheral sealing collar (10) made of a rubber-elastic material, and with a bushing part (5) connected thereto, on the inner wall of which a sealing ring (13) is arranged and into which one end of the feed pipe (3) can be inserted and for which at least one spacer ring (7, 8, 9) which can be pushed on to the insertion part (4) and laid against a stop shoulder (6) is provided.

2. An element according to Claim 1, characterised in that the spacer ring is in the form of a shaped ring (9), the contour of one end-face contact surface (15) of which is adapted to the curvature of the outer surfaces of the main pipe (1).

3. An element according to Claim 2, characterised in that at least one additional spacer ring (7, 8) is provided in addition to the shaped ring (9).

4. An element according to Claim 3, characterised in that at least the shaped ring (9) can be connected securely against twisting with the insertion part (4).

5. An element according to one of Claims 1 to 4, characterised in that at least the spacer ring (7) which lies against the stop shoulder (6) can be connected securely to the insertion part.

6. An element according to one of Claims 1 to 5, characterised in that if at least two spacer rings (7, 8, 9) are provided, means (10) for securely connecting the spacer rings (7, 8, 9) together are provided.

7. An element according to one of Claims 1 to 6, characterised in that the insertion part (4) has on its peripheral surface holding bars (11) oriented substantially parallel to one another for fixing the sealing collar (10).

8. An element according to one of Claims 1 to 7, characterised in that the free end edge (18) of the insertion part (4) and/or the holding bars (11) has a contour corresponding to the formula

$$y = \frac{1}{2}\left(D - \sqrt{D^2 - (d \cdot \sin\alpha)^2}\right)$$

for the developed view.

9. An element according to one of Claims 1 to 8, characterised in that the sealing collar (10) arranged on the outer periphery of the insertion part (4) is undulating in longitudinal section, preferably sawtooth-like.

10. An element according to Claim 9, characterised in that in the case of a sawtooth-like sealing collar (10) the flank (19) facing the end edge (18) of the insertion part (4) is made conically tapering.

11. An element according to one of Claims 1 to 10, characterised in that a sealing ring (13) preferably designed as a sliding seal is arranged on one stop edge (12) of the inner wall of the bushing part (5).

12. An element according to Claim 11, characterised in that the inner wall in the mouth region of the bushing part (5) is provided with a centring ring (16) in front of the sealing ring (13).

**Revendications**

1. Elément destiné au raccordement d'un tube d'arrivée (3) à un tube principal (1) de diamètre plus important, comportant une partie formant embout d'insertion (4), qui peut être insérée dans un perçage du tube principal (1) et qui est munie sur sa surface extérieure d'une manchette d'étanchéité circonférentielle (10) en un matériau ayant l'élasticité du caoutchouc, et une partie formant manchon (5) qui s'y raccorde, sur la paroi intérieure de laquelle est disposée une bague d'étanchéité (13) et dans laquelle peut être insérée une extrémité du tube d'arrivée (3), et pour lequel est prévue au moins une bague d'écartement (7, 8, 9) pouvant être emboîtée sur l'embout d'insertion (4), et pouvant prendre appui sur un épaulement de butée (6).

2. Elément selon la revendication 1, caractérisé en ce que la bague d'écartement est réalisée sous la forme d'une bague profilée (9), dont le contour d'une des surfaces d'appui (15) située du côté frontal est adapté à la courbure de la surface extérieure du tube principal (1).

3. Elément selon la revendication 2, caractérisé en ce que, outre la bague profilée (9), on prévoit au moins une autre bague d'écartement (7, 8).

4. Elément selon la revendication 3, caractérisé en ce qu'au moins la bague profilée (9) peut être reliée solidairement à l'embout d'insertion (4).

5. Elément selon l'une quelconque des revendications 1 à 4, caractérisé en ce qu'au moins la bague d'écartement (7) qui prend appui sur l'épaulement de butée (6) peut être reliée solidairement à l'embout d'insertion.

6. Elément selon l'une quelconque des revendications 1 à 5, caractérisé en ce que dans le cas de la disposition d'au moins deux bagues d'écartement (7, 8, 9), des moyens (10) sont prévus pour relier solidairement les bagues d'écartement (7, 8, 9) entre elles.

7. Elément selon l'une quelconque des revendications 1 à 6, caractérisé en ce que l'embout d'insertion (4) comporte sur sa surface circonférentielle des nervures de retenue (11), qui sont sensiblement orientées parallèlement les unes par rapport aux autres, qui sont destinées à la fixation de la manchette d'étanchéité (10).

8. Elément selon l'une quelconque des revendications 1 à 7, caractérisé en ce que le bord d'extrémité libre (18) de l'embout d'insertion (4) et/ou les nervures de retenue (11) ont en projection développée un contour correspondant à la formule

$$y = \frac{1}{2}\left(D - \sqrt{D^2 - (d \cdot \sin \alpha)^2}\right)$$

9. Elément selon l'une quelconque des revendications 1 à 8, caractérisé en ce que la manchette d'étanchéité (10) disposée sur la circonférence extérieure de l'embout d'insertion (4) a en coupe longitudinale une forme ondulée, de préférence de type en dents de scie.

10. Elément selon la revendication 9, caractérisé en ce que dans le cas d'une manchette d'étanchéité (10) de type en dents de scie, le flanc (19) orienté vers le bord d'extrémité (18) de l'embout d'insertion (4) est réalisé de façon à se terminer en cône.

11. Elément selon l'une quelconque des revendications 1 à 10, caractérisé en ce qu'une bague d'étanchéité (13), qui est de préférence réalisée sous la forme d'une garniture de glissement, est disposée sur un bord de butée (12) de la paroi intérieure de la partie manchon (5).

12. Elément selon la revendication 11, caractérisé en ce que dans la zone d'embouchure de la partie manchon (5), la paroi intérieure est munie d'une bague de centrage (16) en amont de la bague d'étanchéité (13).

Fig. 3

Fig. 1

Fig. 2

EP 0 786 618 B1

Fig. 4

(D=338 für DN300/400)

(D=490mm für DN300/400)

9